# EUROPÄISCHE PATENTANMELDUNG

(11) **EP 4 748 651 A1**
(43) Veröffentlichungstag der Anmeldung: **27.05.2026**
(21) Anmeldenummer: 25214781.4
(22) Anmeldetag: 11.11.2025
(51) Int. Cl.: B60R 13/04

(54) **AUSSENBAUTEIL, FREIZEITFAHRZEUG UND VERFAHREN ZUR HERSTELLUNG EINES AUSSENBAUTEILS**

(30) Priorität: 25.11.2024 DE 102024134670
(71) Anmelder: Bürstner GmbH & CO. KG, 77694 Kehl (DE)
(72) Erfinder: En-Najmi, Youssef, 77704 Oberkirch (DE)
(74) Vertreter: Müller Schupfner & Partner Patent- und Rechtsanwaltspartnerschaft mbB (Muc)

(57) **Zusammenfassung**

Außenbauteil (1), insbesondere für ein Freizeitfahrzeug (100), wobei das Außenbauteil (1) in einem verbauten Zustand zwischen einem Innenbereich (IB) und einem den Innenbereich (IB) umgebenden Außenbereich (AB) angeordnet ist, umfassend
- eine Außenseite (10), die im verbauten Zustand dem Außenbereich (AB) zugewandt ist, und
- eine der Außenseite (10) gegenüberliegenden Innenseite (20),
wobei das Außenbauteil (1) eine Strukturierung (5) zur Erhöhung eines Reflexionsvermögens von UV-Licht (7) des Außenbereichs (AB) aufweist.

## Beschreibung

Die vorliegende Erfindung betrifft ein Außenbauteil, ein Freizeitfahrzeug sowie ein Verfahren zur Herstellung eines solchen Außenbauteils.

Es ist hinlänglich bekannt, dass Freizeitfahrzeuge aus Außenbauteilen zusammengesetzt werden. Diese Außenbauteile trennen im zusammengesetzten Zustand einen Außenbereich von einem Innenbereich. Im Falle eines Freizeitfahrzeugs wird der Innenbereich vorzugsweise durch einen Wohnraum gebildet, in dem die Nutzer des Freizeitfahrzeugs von der Umgebung geschützt sind.

Die Außenbauteile wiederum sind den Einflüssen aus der Umgebung, d.h. aus dem Außenbereich, ausgesetzt. Dies trifft insbesondere auf das UV-Licht zu, das die Außenbauteile signifikant beeinträchtigt und belastet. In Folge der UV-Lichtbelastung, die ein solches Außenbauteil während seiner Lebensdauer erfährt, wird das Außenbauteil spröde bzw. brüchig und erfährt eine Farbveränderung. Insbesondere vergilbt das Außenbauteil. Dies trifft insbesondere auf solche Außenbauteile zu, die dunkel gefärbt sind, da diese in einem erhöhten Umfang Wärme speichern. Aus dem Stand der Technik sind allenfalls UV-Reflektionsschichten bekannt, die an der Außenseite ausgebildet sind.

Es ist eine Aufgabe der vorliegenden Erfindung, Außenbauteile herzustellen, die eine geringere Neigung zur Beschädigung oder Verfärbung aufweisen, wenn sie Einflüssen aus der Umgebung wie insbesondere UV-Licht ausgesetzt sind. Insbesondere gilt dies auch für solche Außenbauteile, die eine vergleichsweise dunkle Farbe aufweisen.

Die vorliegende Erfindung löst die Aufgabe mit einem Außenbauteil, einem Freizeitfahrzeug gemäß Anspruch 8 und einem Verfahren gemäß Anspruch 9. Weitere Ausführungsformen sind der Beschreibung, den abhängigen Ansprüchen und den Figuren zu entnehmen.

Die vorliegende Erfindung schlägt ein Außenbauteil, insbesondere für ein Freizeitfahrzeug, vor, wobei das Außenbauteil in einem verbauten Zustand zwischen einem Innenbereich und einem den Innenbereich umgebenden Außenbereich angeordnet ist, umfassend
- eine Außenseite, die im verbauten Zustand dem Außenbereich zugewandt ist, und
- eine der Außenseite gegenüberliegenden Innenseite,
wobei das Außenbauteil eine Strukturierung zur Erhöhung eines Reflexionsvermögens von UV-Licht des Außenbereichs aufweist.

Gegenüber den aus dem der Stand der Technik bekannten Herangehensweise sieht die vorliegende Erfindung eine Strukturierung vor, die insbesondere dazu ausgelegt ist, dass sie UV-Licht reflektiert. Infolgedessen wird entsprechend weniger UV-Licht in dem Außenbauteil in Form von Wärme gespeichert und die Wärmbelastung für das Außenbauteil wird reduziert. Dies hat wiederum zur Folge, dass die schädliche Beeinträchtigung auf das Außenbauteil reduziert wird und somit die Neigung, brüchig oder spröde zu werden, reduziert wird. Zudem wird auch einer Verfärbung entgegengewirkt, die sich andernfalls als nachteilig für das optische Erscheinungsbild des Außenbauteils erweisen könnte. Durch die Strukturierung ist es mit Vorteil möglich, eine Grundlage für eine Art selbstkühlendes Außenbauteil zu schaffen.

Der Begriff Strukturierung ist hier breit zu verstehen. Dabei ist insbesondere als Strukturierung eine jegliche Modulation, insbesondere in Form von z.B. Erhöhungen, Wellen, Zick-Zack-Linien im Profil oder dergleichen zu verstehen, die dazu führt, dass UV-Licht reflektiert wird. Entsprechend ist die Dimensionierung der Strukturierung anzupassen, um gerade wellenlängenselektiv UV-Licht zu reflektieren. Bevorzugt handelt es sich um spitz zulaufende Erhöhungen. Vorzugsweise ist die Strukturierung durch Prismen-ähnliche oder prismenförmige Erhebungen ausgestaltet, die insbesondere derart angeordnet und/oder ausgestaltet sind, dass sich - ähnlich wie bei einem Katzenauge - eine Totalreflektion des UV-Lichts einstellt. Die, insbesondere pyramidenähnliche, Strukturierung kann dabei gleichmäßig oder ungleichmäßig entlang einer Erstreckungsebene oder eines Erstreckungsverlaufs des Außenbauteils verteilt sein. Vorstellbar ist auch, dass es Teilbereiche gibt, in denen eine erhöhte Dichte von Erhebungen zu finden ist oder Bereiche im Außenbauteil, die keine oder weniger Erhebung aufweisen.

Vorzugsweise aber erstrecken sich die Erhebungen über mehr als 90 % der lateralen Ausdehnung des Außenbauteils. Insbesondere ist die Strukturierung auch in solchen Bereichen zu finden, für die eine erhöhte Belastung zu erwarten ist, beispielsweise angrenzend an solche Bereiche, in denen Außenbauteile miteinander verbunden werden.

Besonders bevorzugt handelt es sich bei dem Außenbauteil um eine Dachkomponente für ein Freizeitfahrzeug, z.B. ein Teil der Dachschale bzw. die Dachschale. Dieses Außenbauteil ist im besonderen Maße dem UV-Licht ausgesetzt. Denkbar ist aber auch, dass als Außenbauteil eine Dachhaube, ein Teil eines Aufstelldachs wie z.B. die Oberschale eines Aufstelldachs, ein Seitenteil oder ein Seitenfenster verstanden wird. Denkbar ist insbesondere, dass das Außenbauteil in ein Schlafdach integriert ist, insbesondere im Falle eines Kastenwagens. Es kann sich auch um ein Bauteil für den Außenbereich handeln, das nicht Teil des Fahrzeugs ist. Grundsätzlich ist es aber auch vorstellbar, dass das Außenbauteil an sich verbaut ist innerhalb eines Freizeitfahrzeugs oder im Allgemeinen in einem KFZ. Insofern ist der Außenbereich nicht darauf beschränkt, dass es den Bereich meint, der unmittelbar der Sonne ausgesetzt ist bzw. die Sonne umfasst, sondern es kann sich auch um ein Bereich handeln, der gegenüber dem verkleideten Innenbereich ein Teilabschnitt umgibt und abgrenzt von diesem Außenbereich. Beispielsweise handelt es sich um eine Komponente im KFZ-Interieur. Das Außenbauteil kann auch Teil eines Bootes sein.

Besonders bevorzugt ist es vorgesehen, dass das Außenbauteil nicht weiß ist. Beispielsweise ist das Außenbauteil dunkel gefärbt, z.B. in Farben wie tiefschwarz (RAL9005) oder blau. Durch die reduzierte Wärmespeicherung im Außenbauteil ist es mit Vorteil möglich, auch solche Farben zu realisieren, die naturgemäß eher zur Speicherung von Wärme neigen. Dies erhöht mit Vorteil die Gestaltungsfreiheit bei der Nutzung von Außenbauteilen.

Gemäß einer bevorzugten Ausführungsform ist es vorgesehen, dass die Strukturierung zwischen der Außenseite und der Innenseite ausgebildet ist. Dadurch wird eine innenliegende Strukturierung bereitgestellt. Dies erweist sich insbesondere deswegen als vorteilhaft, weil damit die Strukturierung nicht an der Außenseite bzw. nicht an der Innenseite des Außenbauteils angeordnet ist. Dadurch wird vermieden, dass sich Verschmutzungen in den Strukturierungen ablagern. Zudem wird ein besonders glattes Bauteil bereitgestellt, dass sich vorteilhaft für die Haptik und auch für den Reinigungsvorgang, beispielsweise eines Freizeitfahrzeugs, erweist.

Vorzugsweise erstreckt sich die Strukturierung in mindestens zwei Richtungen. Es ergibt sich somit eine zweidimensionale Strukturierung und beispielsweise nicht eine reine Rillenstruktur, bei der nur in eine Richtung eine Höhenprofiländerung vorgenommen wird und in der anderen Richtung die Höhe konstant bleibt. Die zwei Richtungen sind bevorzugt linear unabhängig voneinander, d. h. nicht parallel zueinander.

Vorzugsweise ist es vorgesehen, dass die Strukturierung eine Nanostrukturierung ist, wobei insbesondere ein Abstand zwischen zwei benachbarten Erhöhungen der Nanostrukturierung einen Wert zwischen 1 nm und 900 nm, bevorzugt zwischen 1 nm und 500 nm, und besonders bevorzugt zwischen 1 nm und 100 nm annimmt. Dadurch werden Dimensionen bereitgestellt, die sich für die Reflektion von UV-Licht als besonders vorteilhaft erwiesen haben. Damit wird das auf die Strukturierung treffende UV-Licht bevorzugt reflektiert und eine gezielte wellenlängenselektivere Reflektion mit Vorteil ermöglicht.

Vorzugsweise ist es vorgesehen, dass zwischen Strukturierung und Außenseite eine Kunststoffschicht mit einem keramischen Füllmaterial, insbesondere Aluminiumoxid, angeordnet ist. Diese Kunststoffschicht dient insbesondere zum Bereitstellen einer glatten Außenseite des Außenbauteils und insbesondere dazu, möglichst wenig thermische Energie im Außenteil zu speichern. Hierbei erweist es sich als besonders vorteilhaft, Aluminiumoxid oder ein anderes keramisches Füllmaterial in der Kunststoffschicht einzulassen. Beispielsweise handelt es sich bei der Kunststoffschicht um eine Kunststoffschicht aus einem Copolymer und/oder einem Mischpolymer. Beispiele hierfür sind ABS, PVC, PP, PCABS, ASA und/oder vergleichbares. Das Füllmaterial kann dabei vorzugsweise als Partikel, Kügelchen und/oder Mikrosphären in die Kunststoffschicht eingelassen werden. Diese haben eine vernachlässige Absorption im Spektralbereich des UV-Lichts und erzeugen auch bei direkter Sonneneinstrahlung kaum Wärme. Infolgedessen bildet sich ein temperaturbeständiges Außenbauteil.

Vorzugsweise ist es vorgesehen, dass zwischen der Strukturierung und der Innenseite eine Dämmschicht zur thermischen Isolation und/oder Schallabsorption angeordnet ist. Beispielsweise handelt es sich bei der Dämmschicht um eine Matrix, insbesondere um eine Matrix aus Hanffasern und/oder Harz, insbesondere einem Kunstharz. Eine solche Dämmschicht ist dazu geeignet, eine thermische Isolation zu realisieren. Zudem kann sie eine Schallabsorption wirksam herbeiführen. Dadurch wird mit Vorteil der Außenbereich gegenüber dem Innenbereich zusätzlich thermisch und akustisch isoliert.

Vorzugsweise ist es vorgesehen, dass an der Außenseite eine UV-Reflektionsschicht angeordnet ist. Insbesondere schließt das Außenbauteil mit einer UV-Reflektionsschicht ab. Eine solche UV-Reflektionsschicht ist bevorzugt eine PMMA-Schicht, die an der Außenseite angebracht ist. Eine solche PMMA-Schicht oder allgemeiner eine UV-Reflektionsschicht weist typischerweise eine Reflektionsschichtdicke auf, die kleiner ist als 900 µm, bevorzugt kleiner als 700 µm und besonders bevorzugt gleich oder kleiner als 500 µm. Dadurch wird eine besonders dünne Reflektionsschicht bereitgestellt, die besonders bevorzugt einen glatten Abschluss der Außenseite oder des Außenbauteils bildet. Dadurch wird mit Vorteil dieses Reflektionsvermögen des Außenbauteils weiter erhöht.

Vorzugsweise ist es vorgesehen, dass das Außenbauteil eine zwischen der Außenseite und der Innenseite bemessene Gesamtdicke aufweist und die Strukturierungen in einem Abstand zur Außenseite angeordnet ist, wobei das Verhältnis des Abstands zur Gesamtlänge kleiner als 0,6, bevorzugt kleiner als 0,5 und besonders bevorzugt kleiner als 0,4 ist. Dadurch wird die Strukturierung möglichst nah an der Außenseite angeordnet, wodurch der Bereich für die Kunststoffschicht weiter reduziert wird. Dieser Bereich ist der Bereich, in dem das UV-Licht das reflektiert wird und tendenziell wieder absorbiert werden könnte. Durch die Reduktion dieses Teilbereichs wird mehr UV-Licht aus dem Außenbauteil herausgelassen und die Wärmespeicherung weiter reduziert.

Vorzugsweise ist die Gesamtdicke des Außenbauteils kleiner als 20 mm, bevorzugt kleiner als 15 mm und besonders bevorzugt kleiner als 10 mm. Vorzugsweise liegt die Gesamtdicke des Außenbauteils zwischen 5 mm und 15 mm. Dadurch wird ein vergleichsweise dünnes Außenbauteil bereitgestellt, dass hochfunktional ist und den Erfordernissen an Schallisolation und thermische Isolation gerecht wird und zudem UV-Lichtbeständig ist. Es hat sich dabei herausgestellt, dass das Außenbauteil dennoch ausreichend stabil ist.

Vorzugsweise ist es vorgesehen, dass ein Anteil an keramischem Füllmaterial in der Kunststoffschicht einen Wert zwischen 10% und 40%, bevorzugt zwischen 15% und 30% und besonders bevorzugt zwischen 20% und 25% annimmt. Dadurch wir wirksam dafür gesorgt, dass möglichst wenig Wärme im Außenbauteil gespeichert wird.

Hierbei weist das Füllmaterial, insbesondere das keramische Füllmaterial in Form von Partikel, Kügelchen und/oder Mikrosphären ein Durchmesser auf, der bevorzugt zwischen 0,5 µm und 15 µm, besonders bevorzugt zwischen 1 µm und 10 µm und besonders bevorzugt zwischen 2 µm und 5 µm liegt. Es hat sich als vorteilhaft erwiesen mit einem derart hohen Anteil und derart großen Partikeln in der Kunststoffschicht zu arbeiten, um wirksam zu vermeiden, dass Wärme im Außenbauteil gespeichert wird. Zudem hat es sich als vorteilhaft erwiesen, dass durch eine entsprechende Gestaltung, insbesondere bei geringen Dicken, trotzdem eine hohe Stabilität, insbesondere mechanische Stabilität, realisierbar ist, ohne das Gewicht signifikant zu erhöhen.

Vorzugsweise weist die Kunststoffschicht eine Kunststoffschichtdicke zwischen 2 mm und 8 mm, bevorzugt zwischen 4,5 mm und 9 mm und besonders bevorzugt zwischen 4,5 mm und 7mm auf.

Insbesondere ist es vorgesehen, dass zwischen der Innenseite und der Außenseite, bevorzugt zwischen der Strukturierung und der Dämmschicht, eine weitere Reflexionsschicht integriert ist. Dadurch lässt sich das gesamte Reflexionsvermögen weiter erhöhen. Insbesondere ist die weitere Reflexionsschicht innerhalb des Außenbauteils integriert. Dabei kann die weitere Reflexionsschicht beispielsweise an einer Außenseite der Strukturierung und/oder der Dämmschicht angebracht sein, insbesondere an einer Außenseite der Dämmschicht, z.B. zwischen der Dämmschicht und der Strukturierung. Vorstellbar ist, dass die weitere Reflexionsschicht dazu ausgelegt ist ebenfalls dasselbe UV - Licht der UV-Reflexionsschicht zu reflektieren oder ein UV Licht einer anderen Wellenlänge. Vorstellbar ist auch das die weitere Reflexionsschicht für eine Wellenlänge ausgelegt ist, die außerhalb des UV-bereichs liegt. Die weitere Reflexionsschicht kann somit in vorteilhafter Weise dazu genutzt werden das Reflexionsvermögen weiter zu erhöhen und insbesondere flexibler bei der Wahl der einzelnen reflektierenden Komponenten zu sein.

Insbesondere ist es vorgesehen, dass die weitere Reflexionsschicht eine Folie, z.B. Spiegelfolie, insbesondere eine selbstklebende Folie, ist. Dies erleichtert die Montage der weiteren Reflexionsschicht bei der Fertigung des Außenbauteil und führt mit Vorteil nicht zu einer signifikanten Vergrößerung der Gesamtdicke des Außenbauteils. Alternativ kann die Folie bei der Herstellung des Außenbauteils in das Werkzeug eingelegt werden und auf dieses Weise in das Außenbauteil eingebracht werden.

Ein weiterer Gegenstand der vorliegenden Erfindung ist ein Freizeitfahrzeug mit einem erfindungsgemäßen Außenbauteil. Unter einem Freizeitfahrzeug wird ein Landfahrzeug mit einem Wohnbereich verstanden, insbesondere ein Wohnwagen, Wohnmobil, Camper Van oder ein Urban Vehicle. Alle für das Außenbauteil beschrieben Vorteile und Eigenschaften lassen sich analog übertragen auf das Freizeitfahrzeug und andersrum.

Ein weiterer Gegenstand der vorliegenden Erfindung ist ein Verfahren zur Herstellung eines erfindungsgemäßen Außenbauteils, umfassend
- Bereitstellen einer Kunststoffschicht und
- Einlassen der Strukturierung, vorzugsweise durch ein Kalandrieren, in die Kunststoffschicht.

Alle für das Außenbauteil beschriebenen Vorteile und Eigenschaften lassen sich analog übertragen auf das Verfahren und andersrum.

Vorzugsweise ist es vorgesehen, dass zur Herstellung des Außenbauteils die Kunststoffschicht zusammen mit der UV-Reflektionsschicht, insbesondere der PMMA-Schicht, bereitgestellt wird. Hierzu ist es besonders bevorzugt vorgesehen, dass die Kunststoffschicht zusammen mit der UV-Reflektionsschicht durch Koextrudieren entstanden ist. Beispielsweise kann es sich hierbei um eine ABS/PMMA-Platte handeln, die als koextrudierte Platte bereitgestellt wird.

In die Kunststoffschicht wird insbesondere an der Seite, die der UV-Reflektionsschicht gegenüberliegt, die Strukturierung eingelassen. Hierbei erfolgt die Strukturierung bevorzugt durch ein Kalandrieren, insbesondere ein Warmkalandrieren, der zu strukturierenden Rückseite der Kunststoffschicht. Dabei wird in einem zweidimensionalen Muster die Strukturierung in die Kunststoffschicht eingelassen, wodurch sich insbesondere eine Prismen-ähnliche Erhebungsstruktur in der Kunststoffschicht einstellt. Dabei wird insbesondere derart kalandriert, dass sich die bevorzugten Nanostrukturierungen einstellen.

Vorzugsweise ist es vorgesehen, dass das Verfahren weiterhin als Verfahrensschritt umfasst, dass das Außenbauteil einer Formgebung unterworfen wird, vorzugsweise mittels eines Ziehwerkzeugs und/oder eines Spritzgusswerkzeug. Hierzu wird beispielsweise die strukturierte koextrudierte Platte in ein Tiefziehwerkzeug eingelegt. Dadurch ist es in vorteilhafter Weise möglich, die koextrudierte und insbesondere strukturierte Platte einem Tiefziehformvorgang zu unterwerfen, um dieser Platte eine gewünschte Kontur zu verleihen. Anschließend wird die entsprechend geformte Kunststoffschicht mit UV-Reflektionsschicht in ein Formwerkzeug eingesetzt bzw. in ein Spritzgusswerkzeug eingefügt. Hier wird eine Matrix, vorzugsweise ein Faserstoff, insbesondere ein Hanffaserstoff, und/oder Harz, insbesondere ein Kunstharz, umfassende Matrix in das Spritzgusswerkzeug eingeführt, insbesondere eingesprüht, sodass sich die gewünschte Dämmschicht an der Strukturierung ausbildet.

Alternativ oder ergänzend ist es vorstellbar, dass die strukturierte und geformte Platte zusammen mit dem Vlies aus Hanf in ein Pressteil eingelegt wird und so der Formgebung unterworfen werden. Vorzugsweise wird das Spritzgusswerkzeug geschlossen und dann in einem Heizschritt in das herzustellende Außenbauteil erhitzt. Nach einem Abkühlschritt lässt sich dann das Außenbauteil aus dem Werkzeug entformen.

Vorzugsweise ist es vorgesehen, dass eine Folie in ein Werkzeug, insbesondere in das Spritzgusswerkzeug, eingebracht wird. Beispielsweise handelt es sich bei der Folie um eine reflektierende Folie bzw. eine Spiegelfolie. Dabei kann die Folie an der Strukturierung der Folie angebracht oder angelegt sein sein oder an dem Vlies, dass in ein Pressteil eingelegt wird.

Ein weiterer Gegenstand ist ein Verwenden eines erfindungsgemäßen Außenbauteils in einem Freizeitfahrzeug. Alle für das Außenbauteil beschriebenen Eigenschaften und Vorteile lassen sich analog auf das Verwenden übertragen und andersrum.

Weitere Vorteile und Merkmale ergeben sich aus der nachfolgenden Beschreibung der bevorzugten Ausführungsformen des erfindungsgemäßen Gegenstands mit Bezug auf die beigefügten Figuren. Einzelne Merkmale der einzelnen Ausführungsformen können dabei im Rahmen der Erfindung miteinander kombiniert werden.

Es zeigt:
- **Fig.1:**: schematische Darstellung eines Freizeitfahrzeugs mit einem auenbauteil gemäß einer bevorzugten Ausführungsform der vorliegenden Erfindung
- **Fig.2:**: schematische Darstellung eines Außenbauteils gemäß einer beispielhaften Ausführungsform der vorliegenden Erfindung und
- **Fig.3a bis 3d:**: schematische Darstellung eines Verfahrens zur Herstellung eines Außenbauteils gemäß einer beispielhaften Ausführungsform der vorliegenden Erfindung.

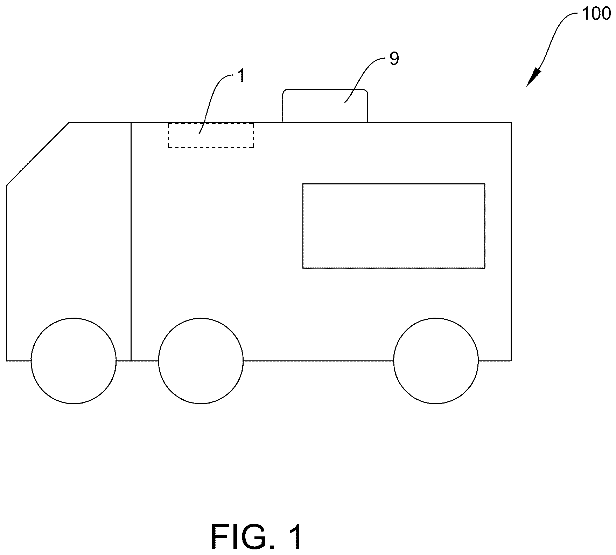

In **Fig.** 1 ist schematisch ein Freizeitfahrzeug 100 mit einem Außenbauteil 1 in einer beispielhaften Ausführungsform dargestellt. Bei einem Freizeitfahrzeug 100 kann es sich beispielsweise um ein gezogenen und/oder selbstfahrenden Wohnbereich handeln. Das Außenbauteil 1 dient insbesondere der Verkleidung dieses Wohnbereichs. Dabei kann das Außenbauteil 1 beispielsweise auch eine Dachhaube 9 sein oder ein Teil der Dachhaube 9 sein. In dem dargestellten Ausführungsbeispiel ist das Außenbauteil 1 ein Bestandteil des Dachs des Freizeitfahrzeugs 100 und an der Oberseite des Freizeitfahrzeugs 10 angeordnet.

Vorstellbar ist es dabei, dass das Außenbauteil 1 als Formteil ausgebildet ist, d.h. eine Bauteilkomponente ist, die nicht ausschließlich eben verläuft, sondern durch mindestens eine Wölbung einen konkreten Außenverlauf bzw. eine Kontur erkennen lässt. Die Nutzung des Außenbauteils 1 ist nicht nur auf die Verwendung als Dachbauteil oder Dachkomponente beschränkt, sondern es ist auch vorstellbar, dass das Außenbauteil 1 an einer Seitenwand des Freizeitfahrzeugs 100 angeordnet ist. Vorzugsweise wird die Außenverkleidung aus einer Mehrzahl von Außenbauteilen 1 zusammengesetzt. Dabei ist es auch vorstellbar, dass sich das Außenbauteil 1 über das ganze Dach erstreckt oder das Dach aus mehreren aneinandergrenzenden, miteinander verbundenen Außenbauteilen 1 gebildet wird. Solche Außenbauteile 1 dienen dazu, einen Außenbereich AB von einem Innenbereich IB des Freizeitfahrzeugs 100 zu trennen.

Entsprechend ist das Außenbauteil 1 zwischen dem Innenbereich IB, insbesondere einem Wohnbereich, und einem Außenbereich AB angeordnet. Dabei ist insbesondere das Außenbauteil 1 der UV-Licht 7 ausgesetzt, die im Außenbereich AB zu finden ist. Eine solche Wechselwirkung mit UV-Licht 7 führt regelmäßig im Stand der Technik dazu, dass die Außenbauteile 1 spröde bzw. brüchig werden bzw. vergilben. Dies ist insbesondere auf die durch Absorption des UV-Lichts 7 verursachte Erwärmung zurückzuführen. Dies trifft insbesondere dann zu, wenn es sich bei dem Außenbauteil 1 um dunkelgefärbte Außenbauteile 1 handelt. Es ist daher bevorzugt vorgesehen, dass die Außenbauteile 1 derart ausgestaltet sind, insbesondere strukturiert sind, dass sie eine erhöhtes UV-Reflektionsvermögen aufweisen, wodurch die auf das Außenbauteil 1 auftreffende UV-Licht 7 reflektiert wird.

Damit wird verhindert, dass die UV-Licht 7 absorbiert und das Außenbauteil 1 erwärmt wird. Dadurch wiederum lassen sich für das Außenbauteil 1 schädliche Erwärmungen in vorteilhafter Weise vermeiden.

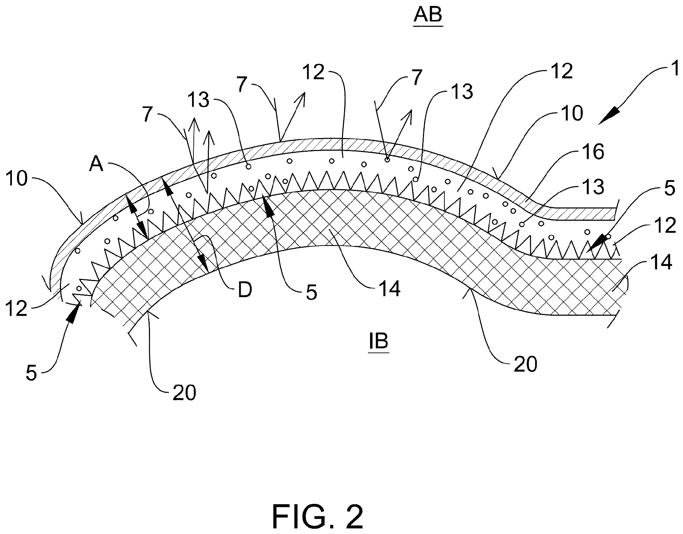

In **Fig. 2** ist schematisch ein Außenbauteil 1 gemäß einer bevorzugten Ausführungsform der vorliegenden Erfindung dargestellt. Das Außenbauteil 1 ist im verbauten Zustand zwischen einem Außenbereich AB und einem Innenbereich IB angeordnet. Sofern es sich um ein Freizeitfahrzeug 100 handelt, ist der Innenbereich IB vorzugsweise ein als Wohnbereich vorgesehener Abschnitt des Freizeitfahrzeugs 100. Das Außenbauteil 1 weist dabei eine zum Außenbereich AB weisende Außenseite 10 und eine der Außenseite 10 gegenüberliegende Innenseite 20 auf. Vorzugsweise grenzt die Außenseite 10 unmittelbar an die Umgebung an, die durch das Außenbauteil 1 zumindest teilweise vom Innenbereich IB abgegrenzt wird. Insbesondere ist es vorgesehen, dass das Außenbauteil 1 ein mehrschichtiges System ist. Vorzugsweise ist es vorgesehen, dass das Außenbauteil 1 eine Strukturierung 5 aufweist, die das UV-Reflektionsvermögen erhöht.

Unter einer Strukturierung 5, die geeignet ist, dass UV-Reflektionsvermögen zu erhöhen, ist eine solche zu verstehen, bei der unter Heranziehen derselben Dimension und insbesondere derselben Rahmenbedingungen, beispielsweise Materialzusammensetzung, mehr UV-Licht 7 reflektiert wir also ohne eine Strukturierung 5.

Hierzu ist es besonders bevorzugt vorgesehen, wenn die Strukturierung 5 eine Nanostrukturierung ist. Dadurch ist die Strukturierung 5 insbesondere an den zu reflektierenden Wellenlängenbereich angepasst. Hierbei ist es bevorzugt vorgesehen, dass die Strukturierung 5 in Form eines Zickzack-Musters oder insbesondere in Form von trapez-, kegel- und/oder prismenartigen Erhebungen ausgebildet ist. Auch Erhebungen in Form von Rillen sind vorstellbar. Dabei ist die Form der Erhebungen nicht auf die vorstehenden Geometrien beschränkt.

Dabei können diese Erhebungen gleichmäßig und/oder unregelmäßig entlang der Erstreckung des Außenbauteils 1 verteilt sein. Die Nanostrukturierung ist bevorzugt derart ausgestaltet, dass sie vergleichbar ist mit einem Katzenauge. Sie ist insbesondere dazu ausgelegt, für eine Totalreflektion des UV-Lichts 7 zu sorgen. Eine Nanostrukturierung ist vorzugsweise eine solche Strukturierung 5, bei der benachbarte Erhebungen in einem Abstand zueinander angeordnet sind, der ein Wert annimmt zwischen 1 nm und 900 nm, bevorzugt zwischen 1 nm und 500 nm und besonders bevorzugt zwischen 1 nm und 100 nm.

Weiterhin ist es besonders bevorzugt vorgesehen, wenn die Strukturierung 5 innerhalb des Außenbauteils 1 angeordnet ist. Somit liegt die Strukturierung 5 zwischen der Innenseite 10 und der Außenseite 20. Dadurch ist es in vorteilhafter Weise möglich, die Außenseite 20 und/oder Innenseite 10 des Außenbauteils 1 weitestgehend glatt zu gestalten, wodurch sich eine entsprechend positive Haptik für das Außenbauteil 1 ergibt. Zudem wird die Wahrscheinlichkeit von Ansammlung an Verschmutzung in der Strukturierung 5 vermieden. Eine solche würde eventuell das Reflektionsvermögen herabsetzen oder zu ungewünschten Verfärbungen am Außenbauteil 1 führen. Vorzugsweise ist es dabei vorgesehen, dass hierzu zwischen der Strukturierung 5 und der Außenseite 20 eine Kunststoffschicht 12 mit einem keramischen Füllmaterial 13 ausgebildet ist. Bevorzugt ist es vorgesehen, dass die Strukturierung 5 ausgebildet ist an der dem Innenbereich IB zugewandten Seite der Kunststoffschicht 12. Insbesondere ist es von Vorteil, wenn die Kunststoffschicht 10 ein keramisches Füllmaterial 13, insbesondere Aluminiumoxid, umfasst, um möglichst wenig Wärme in diesem Bereich zwischen Außenseite 10 und Strukturierung 5 zu speichern. Das Füllmaterial 13 ist dabei gleichmäßig im Volumen der Kunststoffschicht 12 verteilt. Es bildet sich somit kein Gradient für das Füllmaterial 13 in der Kunststoffschicht 12 aus.

Zur weiteren Erhöhung des Reflektionsvermögens insbesondere im UV-Bereich ist es besonders bevorzugt vorgesehen, wenn die Außenseite 10 des Außenbauteils 1 mit einer Reflektionsschicht 16 abschließt, insbesondere einer UV-Reflektionsschicht 13. Besonders bevorzugt handelt es sich bei der UV-Reflektionsschicht 16 um eine PMMA-Schicht.

Weiterhin ist es bevorzugt vorgesehen, dass zwischen der Strukturierung 5 und der Innenseite 10 eine Dämmschicht 14 zur thermischen Isolation und/oder Schallabsorption angeordnet ist. Dadurch kann zusätzlich zu der reduzierten Reflektion von UV-Licht 7 das Außenbauteil 1 auch zur thermischen Isolation und zur Schallabsorption beitragen. Dabei ist es insbesondere vorgesehen, dass das Außenbauteil 1 eine zwischen der Außenseite 10 und der Innenseite 20 bemessene Gesamtdicke D aufweist und die Strukturierung 5 in einem Abstand A zur Außenseite 10 angeordnet ist, wobei das Verhältnis des Abstandes A zur Gesamtdicke D kleiner als 0,6, bevorzugt kleiner als 0,5 und besonders bevorzugt kleiner als 0,4 ist. Dadurch wird insbesondere der Bereich oder das Volumen reduziert, in das dieses UV-Licht 7 zurückreflektiert wird. Dadurch wird die Wärmespeicherung im Außenbauteil 1 mit Vorteil weiter reduziert.

Vorzugsweise ist es vorgesehen, dass - wie in Fig. 2 dargestellt ist - das Außenbauteil 1 einer Kontur folgt und gerade nicht plattenförmig bzw. eben ausgestaltet ist.

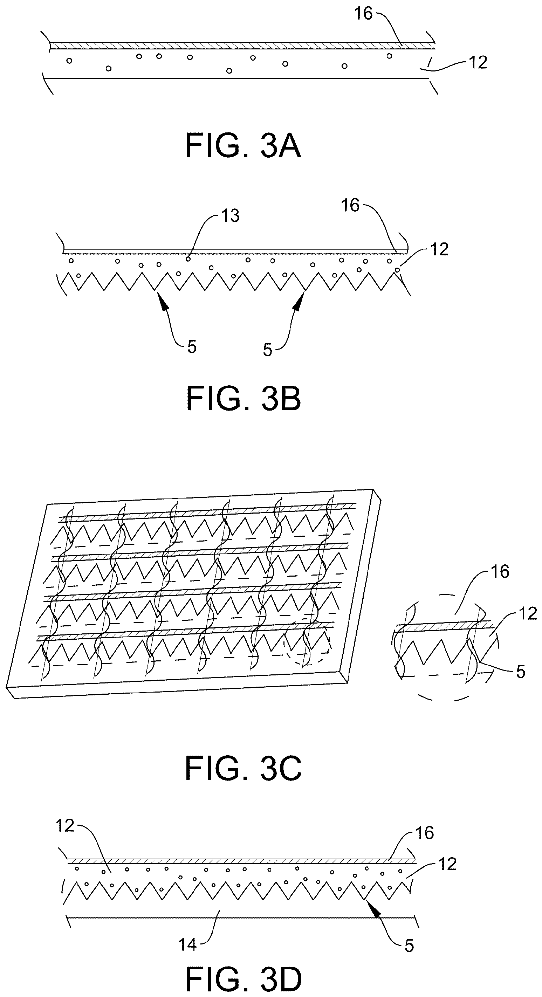

In den **Fig. 3a-3d** sind schematisch Verfahrensschritte zur Herstellung eines Außenbauteils 1 gemäß einer bevorzugten Ausführungsform der vorliegenden Erfindung dargestellt. Insbesondere ist es dabei vorgesehen, dass in Fig. 3a als Ausgangsbauteil 1 eine Kunststoffschicht 12 mit keramischen Füllmaterial 13 bereitgestellt wird, an der eine UV-Reflektionsschicht 16 angebunden ist. Bevorzugt wird dieses Ausgangsbauteil 1 durch Koextrusion hergestellt. Mit anderen Worten: die Kunststoffschicht mit keramischen Füllmaterial wird zusammen mit der UV-Reflektionsschicht koextrudiert und somit gemeinschaftlich hergestellt. In dem sich anschließenden Strukturschritt wird die Strukturierung 5 in der Kunstsoffschicht 12 eingelassen und zwar bevorzugt in der Seite, die der UV-Reflektionsschicht gegenüberliegt. Fig. 3b zeigt eine bevorzugte Ausführungsform zur Herstellung der Strukturierung 5 in der Kunststoffschicht 12 mit keramischen Füllmaterial 13 an der Seite, die der UV-Reflektionsschicht 16 gegenüberliegt. Bevorzugt wird die Strukturierung 5 durch ein Kalandrieren hergestellt, das zu einem zweidimensionalen Muster, insbesondere einer zweidimensionalen Strukturierung 5, an der Außenseite 10 der Kunststoffschicht 12 mit Füllmaterial 13 führt. Alternativ ist es aber auch vorstellbar, dass die Strukturierung 5 durch ein Fräsen oder durch eine optische Bearbeitung erzeugt wird.

In dem in Fig. 3d schematisch dargestellten Verfahrensschritt wird an die Seite mit Strukturierung die Dämmschicht 14 zur thermischen Isolation und/oder Schallabsorption angebunden.

### Bezugszeichenliste:

- 1: Außenbauteil
- 5: Strukturierung
- 7: UV-Licht
- 9: Dachhaube
- 10: Außenseite
- 12: Kunststoffschicht
- 13: Füllmaterial
- 14: Dämmschicht
- 16: UV-Reflexionsschicht
- 20: Innenseite
- 100: Freizeitfahrzeug
- IB: Innenbereich
- AB: Außenbereich
- D: Gesamtdicke
- A: Abstand

## Patentansprüche

1. Außenbauteil (1), insbesondere für ein Freizeitfahrzeug (100), wobei das Außenbauteil (1) in einem verbauten Zustand zwischen einem Innenbereich (IB) und einem den Innenbereich (IB) umgebenden Außenbereich (AB) angeordnet ist, umfassend
- eine Außenseite (10), die im verbauten Zustand dem Außenbereich (AB) zugewandt ist, und
- eine der Außenseite (10) gegenüberliegenden Innenseite (20),
wobei das Außenbauteil (1) eine Strukturierung (5) zur Erhöhung eines Reflexionsvermögens von UV-Licht (7) des Außenbereichs (AB) aufweist.

2. Außenbauteil (1) gemäß Anspruch 1, wobei die Strukturierung (5) zwischen der Außenseite (10) und der Innenseite (20) ausgebildet ist.

3. Außenbauteil (1) gemäß einem der vorhergehenden Ansprüche, wobei sich die Strukturierung (5) in mindestens zwei Richtungen erstreckt.

4. Außenbauteil (1) gemäß einem der vorhergehenden Ansprüche, wobei die Strukturierung (5) eine Nanostrukturierung ist, wobei insbesondere ein Abstand zwischen zwei benachbarten Erhöhungen einen Wert zwischen 1 nm und 900 nm, bevorzugt zwischen 1 nm und 500 nm und besonders bevorzugt zwischen 1 nm und 100 nm annimmt.

5. Außenbauteil (1) gemäß einem der vorhergehenden Ansprüche, wobei zwischen Strukturierung (5) und Außenseite eine Kunststoffschicht (12) mit einem keramischen Füllmaterial (13) angeordnet ist.

6. Außenbauteil (1) gemäß einem der vorhergehenden Ansprüche, wobei zwischen der Strukturierung (5) und der Innenseite (20) eine Dämmschicht (14) zur thermischen Isolation und/oder Schallabsorption angeordnet ist.

7. Außenbauteil (1) gemäß einem der vorhergehenden Ansprüche, wobei an der Außenseite (10) eine UV-Reflexionsschicht (16) angeordnet ist.

8. Außenbauteil (1) gemäß einem der vorhergehenden Ansprüche, wobei das Außenbauteil (1) eine zwischen der Außenseite (10) und der Innenseite (20) bemessene Gesamtdicke (D) aufweist und die Strukturierung (5) in einem Abstand (A) zur Außenseite (10) angeordnet ist, wobei das Verhältnis des Abstands (A) zur Gesamtdicke (D) kleiner als 0,6, bevorzugt kleiner als 0,5 und besonders bevorzugt kleiner als 0,4 ist.

9. Außenbauteil (1) gemäß einem der vorhergehenden Ansprüche, wobei zwischen der Innenseite (20) und der Außenseite (10), bevorzugt zwischen der Strukturierung (5) und der Dämmschicht (5), eine weitere Reflexionsschicht integriert ist.

10. Außenbauteil (1) gemäß Anspruch 9, wobei die weitere Reflexionsschicht eine Folie, insbesondere eine selbstklebende Folie, ist.

11. Freizeitfahrzeug (100) mit einem Außenbauteil (1) gemäß einem der vorhergehenden Ansprüche.

12. Verfahren zur Herstellung eines Außenbauteils (1) gemäß einem der vorhergehenden Ansprüche, umfassend:
- Bereitstellen einer Kunststoffschicht (12) und
- Einlassen der Strukturierung (5), vorzugsweise durch ein Kalandrieren, in die Kunststoffschicht (12).

13. Verfahren gemäß Anspruch 9, weiter umfassend:
- Formgebung des Außenbauteils (1), vorzugsweise mittels eines Ziehwerkzeugs und/oder eines Spritzgusswerkzeugs.

14. Verfahren gemäß einem der vorhergehenden Ansprüche, wobei eine Folie in ein Werkzeug, insbesondere in das Spritzgusswerkzeug, eingebracht wird.

15. Verwenden eines Außenbauteils (1) gemäß einem der Ansprüche 1 bis 10 in einem Freizeitfahrzeug (100).
